# EUROPÄISCHE PATENTSCHRIFT

(11) **EP 1 391 899 B1**
(45) Veröffentlichungstag und Bekanntmachung des Hinweises auf die Patenterteilung: **31.10.2007**
(21) Anmeldenummer: 03017324.9
(22) Anmeldetag: 31.07.2003
(51) Int. Cl.: H01F 1/00

(54) **Verfahren zur Herstellung magnetischer Polymerpartikel**
Production process of magnetic polymer particles
Procédé de fabrication de particules magnétiques polymériques

(30) Priorität: 17.08.2002 DE 10237742
(43) Veröffentlichungstag der Anmeldung: 25.02.2004
(73) Patentinhaber: Forschungszentrum Karlsruhe GmbH, 76133 Karlsruhe (DE)
(72) Erfinder: Franzreb, Matthias, Dr., 76185 Karlsruhe (DE); Guan, Yueping, dr., 76135 Karlsruhe (DE); Bozhinova, Daniela, 76229 Karlsruhe (DE)

(56) Entgegenhaltungen:
- WO-A-97/02580
- LESLIE-PELECKZ D L ET AL: "SELF-STABILIZED MAGNETIC COLLOIDS: ULTRAFINE CO PARTICLES IN POLYMERS" JOURNAL OF APPLIED PHYSICS, AMERICAN INSTITUTE OF PHYSICS. NEW YORK, US, Bd. 79, Nr. 8, PART 2A, 15. April 1996 (1996-04-15), Seiten 5312-5314, XP000695758 ISSN: 0021-8979
- BREULMANN M ET AL: "ELASTIC MAGNETS: TEMPLATE-CONTROLLED MINERALIZATION OF IRON OXIDE COLLOIDS IN A SPONGE-LIKE GEL MATRIX" ADVANCED MATERIALS, VCH VERLAGSGESELLSCHAFT, WEINHEIM, DE, Bd. 10, Nr. 3, 11. Februar 1998 (1998-02-11), Seiten 237-241, XP000732701 ISSN: 0935-9648

## Beschreibung

Magnetische Polymerpartikel, speziell im Mikrometer und Sub-Mikrometer Größenbereich, können mit Hilfe eines von außen einwirkenden Magnetfelds aus einer vorzugsweise wässrigen Lösung einfach abgetrennt und gesammelt werden. Aus diesem Grund haben derartige Polymerpartikel eine vielfältige wissenschaftliche und industrielle Anwendung erfahren, wie z.B. in der biomolekularen Separation, der biomedizinischen und klinischen Diagnostik, der kontrollierten Medikamentendosierung, der Enzymimmobilisierung, als Katalysatorträger, zur Abwasserbehandlung und zusätzlich als Kontrastmittel für die Kernspintomographie (magnetic resonance imaging bzw. MRI), als Informationsspeicher, als magnetischer Toner oder Tinte oder als magnetische Beschichtungen.

Vorrichtung für eine magnetische Separation sind u.A. in der DE 199 34 427 A1 beschrieben.

Ein mögliches Herstellungsverfahren für magnetische Polymerpartikel umfasst im Wesentlichen eine Herstellung nicht magnetischer Polymerpartikel in einem ersten Verfahrensschritt und ein Einbringen magnetischer Substanzen in diese Partikel in einem zweiten Verfahrensschritt.

In der US 5,206,159 ist ein solches Verfahren zur Herstellung magnetischer Polyacrylamidgel-Partikel offenbart, bei dem eine wässrige Eisensalzlösung, d.h. Eisenionen, mit einem mit Wasser quellbaren Polyacrylamidgel zusammengeführt wird, wobei sich die Eisenionen im Polyacrylamidgel einlagern. Anschließend werden die eingelagerten Eisenionen durch die Zugabe einer Lauge in kolloidale, magnetische Eisenoxide umgewandelt.

Ferner wird in der US 5,110,624 ein Verfahren zur Herstellung von porösen, magnetischen Sepharose Ionenaustauscherharzen durch das zeitweilige Einbringen der Sepharoseteilchen in ein kommerzielles Ferrofluid auf Wasserbasis beschrieben. Hierbei dringen kleinere Magnetitpartikel in die Poren der Sepharose ein, während größere Magnetitpartikel sich an die Oberfläche der Sepharose anlagern und eine Oberflächenbeschichtung ausbilden.

Der Hauptnachteil der nach den beiden vorgenannten Verfahren hergestellten magnetischen, hydrophilien Polymerpartikel ist, dass sich die magnetischen Eisenoxide im Gebrauch dieser Polymerpartikel in wässrigen Lösungen aus dem wasserquellbaren Polyarcylamidgel bzw. der Sepharose bereits nach kurzer Zeit wieder herausspülen. Bei einem Kontakt der Eisenoxide mit sauren Lösungen kommt es zudem zu einer Auflösung der Eisenoxide und damit zu einer Elution von Eisenionen aus den Polymerpartikeln. Beide Effekte, das Herausspülen bzw. das Auflösen der Eisenoxide, führen zwangsläufig zu einer raschen Verschlechterung der magnetischen Eigenschaften der Polymerpartikel.

Ausgehend davon hat die vorliegenden Erfindung zur Aufgabe, ein einfaches Verfahren zur Herstellung magnetischer Polymerpartikel vorzuschlagen, welche die vorgenanten Nachteile nicht aufweisen.

Diese Aufgabe wird durch die Merkmale in Anspruch 1 gelöst; die hierauf bezogenen Unteransprüche beinhalten vorteilhafte Ausführungsformen dieser Lösung.

Ein wesentliches Merkmal der Erfindung liegt in der Bereitstellung einer kolloidalen Dispersion oder Suspension von fein verteilten magnetischen Materialien in einem hydrophoben organischen Lösungsmittel. Es folgt eine Vermischung dieser kolloidalen Dispersion mit einem ebenfalls bereitgestellten hydrophoben Pulver, bestehend aus einem Kunststoffpolymer oder einem Kunststoffcopolymer. In Folge dessen kommt es zu einer Quellung der hydrophoben Polymer- oder Copolymerpartikel, wobei die magnetischen Materialien von den Partikeln gemeinsam mit dem organischen Lösungsmittel aufgenommen werden. Bei einer anschließenden Entfernung des organischen Lösungsmittels werden die magnetischen Materialien größtenteils in der Matrix des Polymers oder Copolymers eingeschlossen, während die Partikel mit zunehmender Entfernung bestrebt sind, von einem gequollenen in einen kompakten Zustand zu zurückzuwechseln.

Bei den im Rahmen der vorliegenden Erfindung eingesetzten hydrophoben Polymerpartikeln handelt es sich vorzugsweise um homopolymere Partikel oder um Copolymere. Die homopolymere Partikel bestehen aus einem hydrophoben Vinylmonomer, die Coolymere aus 50-100 Gew.-%, vorzugsweise aber 75-100 Gew.-%, eines hydrophoben Vinylmonomers, 0-50 Gew. %, vorzugsweise 0-25 Gew.-%, eines hydrophilen Vinylmonomers sowie 0-10 Gew.-%, vorzugsweise 0,01-5 Gew.-%, aus einem vernetzbaren Vinylmonomers. Dabei sind die genannten Monomere untereinander co-polymerisierbar.

Die im Rahmen der vorliegenden Erfindung für eine eingangs beschriebene magnetische Separation einsetzbare hydrophoben Polymerpartikel können poly- oder monodisperse Partikelgrößenverteilungen besitzen, vorzugsweise monodispers, wobei die Größe der Polymerpartikel zwischen 50 nm und 500 µm, vorzugsweise zwischen 100 nm und 10 µm, liegt. Partikel zwischen 100 nm und 10 µm sind nämlich klein genug um eine hohe spezifische Oberfläche zu besitzen, aber dabei auch groß genug um sich gut magnetisch abscheiden zu lassen.

Für die Herstellung dieser hydrophoben Polymerpartikel eignen sich konventionelle Polymerisationstechniken, wie z.B. die Mikroemulsions-Polymerisation, Miniemulsions-Polymerisation, eine gewöhnliche Emulsions-Polymerisation, die sog. "soapfree" Emulsions-Polymerisation, eine Dispersions-Polymerisation, Fällungs-Polymerisation oder eine Suspensions-Polymerisation. Weitere mögliche Herstellungsverfahren sind die Mehrstufen "Seeding" Polymerisation und die SPG (Shirasu Porous Glass) Emulgiertechnik. Es bietet sich daher auch an, die hydrophoben Polymerpartikel aus den kommerziell erhältlichen Polymerpartikel-Produkten, welche den zuvor genannten Kriterien hinsichtlich der Materialzusammensetzung oder der Partikelgröße entsprechen, auszuwählen.

Die im Rahmen der vorliegenden Erfindung eingesetzte kolloidale Dispersion oder Suspension von fein verteilten magnetischen Materialien, teilweise auch als Ferrofluid, magnetisches Kolloid oder magnetisches Fluid bezeichnet, ist mit einer hydrophoben, oberflächenaktiven Substanz beschichtet und gleichmäßig in einem unpolaren organischen Lösungsmittel dispergiert. Als magnetische Material eignen sich grundsätzlich Werkstoffe mit para-, ferro- oder ferrimagnetischen, vorzugsweise aber superparamagnetischen Eigenschaften, d.h. die Magnetisierung der magnetischen Materialien verschwindet nach Abschalten bzw. Entfernen eines äußeren Magnetfeldes wieder vollständig ohne Zurückbleiben einer Remanenz, d.h. ohne Restmagnetisierung.

Bei einer eingangs beschriebenen magnetischen Separation werden bestimmte Stoffe in einer wässrigen Lösung durch die Polymerpartikeln ad- oder absorbiert und gemeinsam mit diesen magnetisch aus der Lösung abgetrennt. Besonders starke magnetische Eigenschaften erhöhen dabei die Effizienz dieser Abtrennung. Dabei wirken trägheitslose superparamagnetische Eigenschaften besonders vorteilhaft, da in diesem Fall keinerlei Restmagnetisierung eine Resuspendierung nach der Abtrennung behindert.

Geeignete magnetische Materialien bestehen zum überwiegenden Teil aus Eisen, Kobalt, Nickel sowie deren Legierungen mit anderen Metallen, oder aber aus Metalloxiden wie Magnetit, γ -Hämatit oder Chromdioxid.

Das magnetische Material muss ausreichend fein sein, um in die gequollenen Polymerpartikel einzudringen. Die Partikelgröße des magnetischen Materials liegt im Bereich von 3 nm bis 200 nm, vorzugsweise 5 nm bis 50 nm. Damit liegt die Partikelgröße in besonders vorteilhafter Weise in einem Größenbereich in dem viele der vorgenannten Materialien bereits die vorteilhaften superparamagnetische Eigenschaften aufweisen. Allgemein weisen nämlich alle magnetischen Materialien unterhalb einer bestimmten kritischen Partikelgröße die bevorzugten superparamagnetischen Eigenschaften auf.

Die Partikel der magnetischen Materialien sind mit oberflächenaktiven Stoffen, wie z.B. Fettsäuren oder Silan-Kopplungsreagenzien, beschichtet. Derartige Beschichtungen haften mit den hydrophilen Enden der Beschichtungsmoleküle gut an der Oberfläche der magnetischen Materialien, während die hydrophoben Enden der Beschichtungsmoleküle in das Lösungsmittel ragen und die Materialien damit in vorteilhafter Weise gut dispergierbar in organischen Medien machen.

Für eine optimale Dispergierbarkeit, aber auch für eine erfolgreichen Ablauf des Verfahren der Erfindung, ist eine Abstimmung zwischen dem unpolaren organischen Lösungsmittel ,dem oberflächenaktiven Stoffen der Beschichtung, der magnetischen Materialien sowie den hydrophoben Polymerpartikel erforderlich. Dabei muss das unpolare organische Lösungsmittel in der Lage sein die hydrophoben Polymerpartikel auf ein größeres Volumen zu quellen. Hierfür eignen sich insbesondere aromatische Verbindungen, wie z.B. Toluol und Xylol, chlorierte aromatische Verbindungen, wie z.B. Mono- und Dichlorbenzol, aliphatische und zyklische Kohlenwasserstoffe, wie z.B. Heptan und Cyclohexan, chlorierte aliphatische Verbindungen, wie z.B. Chloroform und Dichlorethan, Dialkylether, wie z.B. Diethylether, Alkohole, wie z.B. Pentanol, Ester, wie z.B. Ethyl-Acetat, sowie deren Mischungen.

Stellvertretend für mögliche Herstellverfahren für magnetische Kolloide wird beispielhaft das eines eisenhaltigen Kolloids herangezogen. Bei diesem Verfahren werden als Verfahrensschritte eine gemeinsame Fällung von Eisen(II)- und Eisen(III)-Salzen mit Ammoniumhydroxid, gefolgt von der Zugabe von Fettsäuren und dem anschließenden Auflösen des resultierenden magnetischen Produkts in einem unpolaren organischen Lösungsmittel, genannt. Verfahren für andere magnetische Kolloide, welche sich im Prinzip nur durch andere Ausgangschemikalien unterscheiden liegen im Äquivalenzbereich der Offenbarung.

Die Konzentration des im magnetischen Kolloid eingemischten magnetischen Materials wird je nach Wahl von magnetischem Material und organischem Lösungsmittel individuell eingestellt. Sie bestimmt sich insbesondere aus dem Aufnahmevermögen der magnetischen Materialpartikel in den Polymerpartikeln, dem Quellungsverhalten der Polymerpartikel im organischen Lösungsmittel sowie aus den gewünschten magnetischen Eigenschaften, welche durch die Verwendung der Partikel im Rahmen einer eingangs genannten magnetischen Separationsverfahren vorgegeben werden. Die Konzentration des magnetischen Materials im organischen Lösungsmittel liegt im allgemeinen zwischen 0,2 bis 50 Gew.-%, vorzugsweise zwischen 0,5 und 20 Gew.-%. Der bevorzugte Bereich erklärt sich aus der Notwendigkeit über die Quellung ausreichende Mengen an Magnetpartikeln in die Polymerpartikel zu bekommen (nicht zu niedrige Konzentrationen) und den Schwierigkeiten sehr hohe Gewichtsanteile an magnetischen Partikeln ohne die Neigung zur Agglomeration in Dispersion zu halten

Ferner lässt sich der Vorgang zur Dotierung von Polymerpartikeln mit einem magnetischen Material über die beschriebene Quellung mit anschließenden Entfernen der organischen Lösungsmittel aus den dotierten Polymerpartikeln wiederholen, wobei es bei jeder Iteration zu einer weiteren Anreicherung an magnetischen Material in den Polymerpartikeln kommt.

Entsprechend der vorliegenden Erfindung gibt es zwei Methoden um die hydrophoben Polymerpartikel mit der magnetischen Dispersion oder Suspension, d. h. mit dem magnetischen Kolloid, zu vermischen, wobei das unpolare organische Lösungsmittel ein Aufquellen der Polymerpartikel auf ein größeres Volumen bewirkt.

Die erste Methode umfasst ein Einmischen der hydrophoben Polymerpartikel in das magnetische Kolloid unter Rühren, wobei hierfür Temperatur und Zeit vorgegeben sind.

Die zweite Methode besteht darin zunächst das magnetische Kolloid in Form einer Öl-in-Wasser-Emulsion als feine Tropfen in einer wässrigen Lösung zu verteilen. Die Herstellung der Emulsion wird dabei durch den Zusatz oberflächenaktiver Stoffe, wie z.B. Dodecylsulfat Natriumsalz (SDS) oder Octadecylpyridiniumbromid (CTAB), sowie durch eine anschließende Homogenisierung der Mischung durch einen Homogenisierer oder ein Ultraschallbad erreicht. Anschließend werden die Polymerpartikel in die gerührte Emulsion eingemischt. Aufgrund ihrer hydrophoben Eigenschaften vereinigen sich die Polymerpartikel mit den Tröpfchen an magnetischem Kolloid und es erfolgt wie im Falle der ersten Methode eine Quellung und ein Eindringen des magnetischen Materials. Durch den Umstand, dass dieser Vorgang innerhalb eines mikroskopischen Tröpfchens erfolgt, ist die Quellung der Polymerpartikel limitiert und es kommt auch für wenig bzw. nicht vernetzte Polymerpartikel zu keiner vollständigen Auflösung.

Welche der beide Methoden letztendlich zum Einsatz kommt, hängt von dem Material und Beschaffenheit der hydrophoben Polymerpartikel ab.

Wird ein unvernetztes Polymer oder Copolymer als Polymerpartikel eingesetzt oder ist dieses im magnetischen Kolloid löslich, so ist die erste Methode nicht anwendbar und es muss auf die zweite Methode zurückgegriffen werden. Bei der ersten Methode, d.h. dem Einsatz des reinen magnetischen Kolloids können unvernetzte Polymere uneingeschränkt quellen und es besteht die Gefahr einer vollständigen Auflösung der Partikel. Bei der zweiten Methode ist das für ein Partikel zur Quellung zur Verfügung stehende Magnetische Kolloid durch die Größe des Emulsionströpfchens limitiert. Das Partikel kann maximal das ganze Tröpfchen aufnehmen und quillt dadurch ungefähr auf dessen Größe. Der hydrophile Charakter der umgebenden wässrigen Lösung verhindert aber eine weitere Auflösung.

Ebenso ist die zweite Methode vorzuziehen, wenn die hydrophoben Polymerpartikel bereits oberflächenmodifiziert wurden und hydrophile funktionelle Gruppen an der Oberfläche besitzen. Die Vorgehensweise der Durchführung des Quellvorgangs innerhalb einer Emulsion dient dem Schutz dieser Oberflächen und behindert eine Agglomeration der Partikel.

Sind die Polymerpartikel aus einem vernetzen Copolymer oder Polymer ohne hydrophile Oberflächengruppen, können beide der genannten Methoden zum Einsatz kommen, wobei die erste Methode aufgrund des geringeren Aufwandes vorzuziehen ist.

Neben der chemischen Zusammensetzung von Polymerpartikel und organischem Lösungsmittel hängt der erreichte Quellungsgrad der Polymerpartikel direkt vom Vernetzungsgrad des Polymers, der Menge an eingesetztem magnetischen Kolloid und der Quellungszeit ab. Der Quellungsgrad entspricht dabei dem Verhältnis aus gequollenem zum ursprünglichen Partikelvolumen und steigt allgemein mit abnehmendem Vernetzungsgrad, zunehmender Temperatur und zunehmender Quellungszeit. Der üblicherweise erreichbare Quellungsgrad zwischen 1,1 und 50, in den meisten Fällen zwischen 2 und 15, wobei ein Anteil an magnetischem Kolloid zwischen dem 0,1 bis 49-fachen des ursprünglichen, ungequollenen Partikelvolumens zugrundegelegt wird.

Die Abtrennung der gequollenen, magnetischen Polymerpartikel von dem Überschuss an Magnetischem Kolloid bzw. von der verbleibenden Emulsion kann ohne Probleme mit konventionellen Fest-Flüssig-Trennverfahren, wie z.B. Zentrifugieren, Filtration oder Magnetseparation, erfolgen. Die Entfernung des organischen Lösungsmittels aus den gequollenen Partikeln muß dann in einer Weise erfolgen, dass ein überwiegender permanenter Einschluss des magentischen Materials in der Polymermatrix erfolgt.

Für die Entfernung des Lösungsmittels aus den Polymerpartikeln eignen sich im vorliegenden Fall insbesondere zwei nachfolgend beschriebene Verfahrenswege.

Der erste Verfahrensweg umfasst eine Trocknung der gequollenen Polymerpartikel, wobei sich hierfür grundsätzlich alle Verfahren, wie z.B. Lufttrocknung, Vakuumtrocknung, Gefriertrocknung, Sprühtrocknung und Ofentrocknung eignen.

Der zweite Verfahrensweg umfasst eine Extraktion des organischen Lösungsmittels aus den Polymerpartikeln. Die Extraktion erfolgt durch das Waschen der Partikel mit einem polaren organischen Lösungsmittel, das die Partikel nicht quellt und das mit dem ursprünglichen organischen Lösungsmittel jedoch nicht mit der Oberflächenbeschichtung des magnetischen Materials mischbar ist. Je nach Effizienz der Extraktion ist die Waschprozedur mehrfach zu wiederholen. Beispiele für in Frage kommende polare organische Lösungsmittel sind Alkohole wie z.B. Methanol, Ethanol und Isopropanol, Ketone wie z.B. Aceton und Ether wie z.B. Ethylether. Die Auswahl des polaren organischen Lösungsmittels ist abhängig von der chemischen und morphologischen Zusammensetzung der Polymerpartikel, dem zu extrahierenden Lösungsmittel und der Beschichtung des magnetischen Materials ab. Nach erfolgter Extraktion sind die kompakten, magnetischen Polymerpartikel von dem polaren organischen Lösungsmittel durch ein zweites Fest-Flüssig-Trennverfahren, wie z.B. über ein Zentrifugalverfahren, eine Filtration oder auch über eine eingangs genannte Magnetseparation, abtrennbar.

In einer speziellen Ausführungsform des zweiten Verfahrensweges kann im Falle einer passenden, zuvor erwähnten Zusammensetzung das polare organische Lösungsmittel direkt der Emulsion zugegeben werden. In diesem Fall handelt es sich bei der zum Waschen eingesetzten Substanz um eine Mischung aus dem polaren organischen Lösungsmittel und Wasser.

Der resultierende Gehalt an magnetischem Material in den Polymerpartikeln kann durch Einstellen des Quellungsgrads und der Konzentration an magnetischem Material in dem Magnetischen Kolloid eingestellt werden, wobei Werte je nach Morphologie der magnetischen Partikel und der Polymerpartikel bis zu 75 Gew.-% erreichbar sind.

Die im Rahmen der vorliegenden Erfindung erzeugten magnetischen Polymerpartikel sind als Ausgangsmaterial zur Herstellung funktioneller magnetischer Partikel für die Biomolekulare Separation, für die Biomedizinische und Klinische Diagnostik sowie für die kontrollierte Medikamentenabgabe einsetzbar. Des weiteren eignen sich die Partikel zur Enzymimmobilisierung, als Katalysatorträger und zur Abwasserbehandlung. Schließlich sind Anwendungen als Kontrastmittel für die Kernspintomographie (magnetic resonance imaging bzw. MRI), als Informationsspeicher, als magnetischer Toner oder Tinte, als magnetische Beschichtungen u.s.w. denkbar.

Die Erfindung wird anhand der folgenden Verfahrensbeispiele mit Hilfe der folgenden Beispiele, welche jeweils konkrete Anwendungsbeispiele darstellen, erläutert. Dabei beschreiben die Beispiele 1 und 2 die Teilschritte der Herstellung eines magnetischen Kolloids auf Basis eines unpolaren organischen Lösungsmittels, die Beispiele 3 bis 5 die Teilschritte der Herstellung monodisperser, hydrophober Polymerpartikel sowie die Beispiele 6 bis 11 die Umwandlung der unmagnetischen in magnetische Polymerpartikel.

### Beispiel 1:

In einen Erlenmeierkolben mit einem Fassungsvermögen von einem Liter sowie ausgestattet mit einer elektrischen Heizplatte, einem Paddelrührer, einem Thermometer und einer Vorrichtung zur Begasung mit Stickstoff wird eine Mischung aus FeCl₂·4H₂O (17,2 g) und FeCl₃·6H₂O (47,0 g) in destilliertem Wasser (1000 ml) aufgelöst und bei 70°C unter einer Stickstoffatmosphäre gerührt. Danach wird eine 25%-ige Ammoniaklösung (56 ml) rasch unter intensivem Rühren unter Bildung einer Magnetitsuspension hinzugegeben. Unmittelbar anschließend wird unter Rühren solange Ölsäure langsam über eine Bürette zu der Magnetitsuspension getropft, bis sich ein magnetisches Gel und eine klare überstehende Lösung gebildet haben. Der Vorgang dauert ungefähr 10 min und verbraucht 24-30 ml Ölsäure. Während des Vorgangs wird die Suspension auf 90°C erhitzt und nach Abschluss der Gelbildung noch für 20 min auf dieser Temperatur gehalten. Nach Abkühlung auf Raumtemperatur wird die überstehende Lösung abdekantiert und das schwarze Magnetitgel 4-6 mal mit destilliertem Wasser gewaschen. Das entstandene Magnetitgel enthält 20 g Magnetit (Fe₃O₄). Das Magnetitgel wird in 70 ml Hexan, Chloroform oder Toluol unter Rühren gelöst und für 1 min mit Ultraschall behandelt. Als Ergebnis erhält man ein stabiles Magnetisches Kolloid auf Basis von Hexan, Chloroform oder Toluol.

### Beispiel 2:

Ein kommerzielles magnetisches Kolloid auf Wasserbasis (z.B. Ferrofluidics®, der Fa. FerroTec GmbH) wird mit Hilfe von Aceton ausgefällt. Nach wiederholtem Waschen mit Aceton und Trocknung können die zurückbleibenden magnetischen Partikel in einem unpolaren organischen Lösungsmittel, wie z.B. Hexan, Chloroform oder Toluol, gelöst werden.

### Beispiel 3:

Dieses Beispiel umfasst eine Dispersion mit Polymerisation. Dazu werden 12 g Polyvinyl-Pyrrolidon (PVP, mittleres Molekulargewicht 58000, K29-32) in einer Mischung aus 450 ml Ethanol und 90 ml Wasser gelöst und in einen 1 L Erlenmeierkolben, ausgestattet mit einer elektrischen Heizplatte, einem Paddelrührer, einem Thermometer und einer Vorrichtung zur Begasung mit Stickstoff, überführt. 0,6 g α,α'-Azoisobutyronitril (AIBN) werden in einer Mischung aus 59,4 ml Methylmethacrylat (MMA) und 0,6 ml Ethylenglycoldimethacrylat (EGDMA) gelöst und zu dem Inhalt des Erlenmeierkolben hinzugegeben. Die Polymerisationsreaktion dauert 24 h bei 70°C, wobei die Dispersion während der Reaktion unter einer Stickstoffatmosphäre intensiv gerührt wird. Nach der Polymerisation werden die Polymerpartikel durch Zentrifugation oder Filtration abgetrennt und mehrmals mit Ethanol und heißem Wasser gewaschen. Die Partikel werden für den späteren Gebrauch in Wasser gelagert. Der mittlere Durchmesser der erzeugten Polymethyl-Methacrylat Partikel (PMMA) wurde mit Hilfe eines ESEM (Environmental Scanning Electron Microscope) zu 2 µm bestimmt, wobei eine enge Partikelgrößenverteilung vorlag.

### Beispiel 4:

Es werden 660 ml Wasser, 59,7 ml Styrol und 0,6 ml Divinylbenzol (DVB, 55%) vermischt und in einen 1 Liter fassenden Rundkolben, ausgestattet mit einer elektrischen Heizplatte, einem Paddelrührer, einem Rückflusskühler, einem Thermometer, einem Einlass für die Zugabe von Chemikalien und einer Vorrichtung zur Begasung mit Stickstoff, überführt. Nach 30 min Rührzeit unter Stickstoffatmosphäre werden 0,15 g Kaliumpersulfat (KPS), das in 90 ml Wasser gelöst ist, dem Reaktor zugeführt. Die Polymerisationsreaktion dauert 28 h bei 60°C, wobei die Dispersion während der Reaktion unter einer Stickstoffatmosphäre intensiv gerührt wird. Nach Abschluss der Polymerisation werden die Polymerpartikel durch Zentrifugation oder Filtration abgetrennt und mehrmals mit Ethanol und heißem Wasser gewaschen. Die Partikel werden für den späteren Gebrauch in Wasser gelagert. Der mittlere Durchmesser der erzeugten Polystyrol-Partikel (PSt) wurde mit Hilfe eines ESEM (Environmental Scanning Electron Microscope) zu 0,8 µm bestimmt, wobei eine enge Partikelgrößenverteilung vorlag.

### Beispiel 5:

In einen 1 Liter fassenden Rundkolben, ausgestattet mit einer elektrischen Heizplatte, einem Paddelrührer, einem Rückflusskühler, einem Thermometer, einem Einlass für die Zugabe von Chemikalien und einer Vorrichtung zur Begasung mit Stickstoff, werden 2 g Dodecylsulfat Natriumsalz (SDS) und 4 g Hexadecanol (CA) in 500 ml Wasser gelöst. Nach intensivem Rühren für 30 min bei 60°C werden 99.5 ml Vinylacetat (VAc) und 1 ml Divinylbenzol (DVB, 55%) hinzugegeben und die Mischung für 3 min mit Ultraschall behandelt. Anschließend wird die Miniemulsion auf 70°C erhitzt und nach Zugabe von 0,1 g Benzylperoxid (BPO) wird die Polymerisationsreaktion für 8 h unter intensivem Rühren und einer Stickstoffatmosphäre durchgeführt. Nach Abschluss der Polymerisation werden die Polymerpartikel durch Zentrifugation oder Filtration abgetrennt und mehrmals mit Ethanol und heißem Wasser gewaschen. Die Partikel werden für den späteren Gebrauch in Wasser gelagert. Der mittlere Durchmesser der erzeugten Polyvinylacetat Partikel (PVAc) wurde mit Hilfe eines ESEM (Environmental Scanning Electron Microscope) zu 0,2-0,3 µm bestimmt, wobei eine relativ enge Partikelgrößenverteilung vorlag.

### Beispiel 6:

Für eine Umwandlung von unmagnetischen in magnetische Polymerpartikel werden im Rahmen dieses Ausführungsbeispiels 10 g trockener PMMA Partikel aus Beispiel 3 in 40 ml magnetischem Kolloid auf Chloroformbasis (vgl. Beispiel 1) suspendiert. Anschließend wird die Suspension für 2 h unter Raumtemperatur gerührt. Die gequollenen PMMA Partikel werden von dem Überschuss an magnetischem Kolloid durch Zentrifugation abgetrennt. Durch Trocknen der gequollenen PMMA Partikel für 12 h bei 50°C wird das Chloroform aus den Partikeln verdampft und kompakte magnetische PMMA Partikel bleiben zurück. Die magnetischen PMMA Partikel werden mit wässrigen Lösungen oberflächenaktiver Substanzen, wie z.B. SDS, dreimal gewaschen. Der resultierende Magnetitgehalt in den magnetischen PMMA Partikeln beträgt ca. 35 Gew.-%. Die mit Hilfe eines ESEM (Environmental Scanning Electron Microscope) bestimmten Werte für den mittleren Partikeldurchmesser und die Partikelgrößenverteilung stimmen nahezu mit den Werten für die unmagnetischen Ausgangspartikel aus Beispiel 3 überein.

### Beispiel 7:

Alternativ zu Beispiel 6 werden 10 g trockene PMMA Partikel aus Beispiel 3 in 40 ml magnetischem Kolloid auf Chloroformbasis (Beispiel 1) suspendiert. Anschließend wird die Suspension für 2 h unter Raumtemperatur gerührt. Die gequollenen PMMA Partikel werden von dem Überschuss an magnetischem Kolloid durch Zentrifugation abgetrennt. Die gequollenen magnetischen PMMA Partikel werden unter Rühren für 5 h bei Raumtemperatur in 100 ml Aceton gerührt, wobei das Chloroform von den gequollenen PMMA Partikeln extrahiert wird. Anschließend werden die entstandenen, kompakten magnetischen PMMA Partikel von dem Aceton durch Filtration abgetrennt. Die magnetischen PMMA Partikel werden mit wässrigen Lösungen oberflächenaktiver Substanzen, wie z.B. SDS, dreimal gewaschen. Der resultierende Magnetitgehalt in den magnetischen PMMA Partikel beträgt ca. 30 Gew.-%. Die mit Hilfe eines ESEM (Environmental Scanning Electron Microscope) bestimmten Werte für den mittleren Partikeldurchmesser und die Partikelgrößenverteilung stimmen nahezu mit den Werten für die unmagnetischen Ausgangspartikel aus Beispiel 3 überein.

### Beispiel 8:

Als dritte Alternative für eine Umwandlung werden 10 g trockene PMMA Partikel aus Beispiel 3 in 40 ml magnetischem Kolloid auf Chloroformbasis (Beispiel 1) mit einem Einsatz von Ultraschall suspendiert. Anschließend wird die Suspension für 2 h unter Raumtemperatur gerührt. Die gequollenen PMMA Partikel werden von dem Überschuss an magnetischem Kolloid durch Zentrifugation abgetrennt. Die gequollenen magnetischen PMMA Partikel werden unter Rühren für 5 h bei Raumtemperatur in 100 ml Aceton gerührt, wobei das Chloroform von den gequollenen PMMA Partikeln extrahiert wird. Anschließend werden die entstandenen, kompakten magnetischen PMMA Partikel von dem Aceton durch Filtration abgetrennt. Die magnetischen PMMA Partikel werden mit wässrigen Lösungen oberflächenaktiver Substanzen, wie z.B. SDS, dreimal gewaschen. Der resultierende Magnetitgehalt in den magnetischen PMMA Partikel beträgt ca. 30 Gew.-%. Die mit Hilfe eines ESEM (Environmental Scanning Electron Microscope) bestimmten Werte für den mittleren Partikeldurchmesser und die Partikelgrößenverteilung stimmen nahezu mit den Werten für die unmagnetischen Ausgangspartikel aus Beispiel 3 überein.

### Beispiel 9:

Im Rahmen eines vierten Verfahrensbeispiels für eine Umwandlung werden 18 ml des magnetischen Kolloids auf Toluolbasis aus Beispiel 1, 150 ml Wasser und 0,6 g SDS in einem Ultraschallbad homogenisiert, so dass sich eine Öl-in-Wasser Emulsion mit einer Tropfengröße von 0,2 - 0,3 µm bildet. Diese Emulsion wird mit 40 ml einer wässrigen Suspension vermischt, die 5 g Polystyrol (PSt) Partikel aus Beispiel 4 enthält. Nach einer Rührzeit von 10 h bei Raumtemperatur werden die gequollenen PSt Partikel von der Emulsion durch Magnetische Sedimentation abgetrennt. Die gequollenen magnetischen PSt Partikel werden unter Rühren für 5 h bei Raumtemperatur in 50 ml Aceton gerührt, wobei das Toluol von den gequollenen PSt Partikeln extrahiert wird. Anschließend werden die entstandenen, kompakten magnetischen PSt Partikel von dem Aceton durch Magnetische Sedimentation abgetrennt. Die magnetischen PSt Partikel werden mit wässrigen Lösungen oberflächenaktiver Substanzen, wie z.B. SDS, dreimal gewaschen. Der resultierende Magnetitgehalt in den magnetischen PSt Partikeln beträgt ca. 40 Gew.-%. Die mit Hilfe eines ESEM (Environmental Scanning Electron Microscope) bestimmten Werte für den mittleren Partikeldurchmesser und die Partikelgrößenverteilung stimmen nahezu mit den Werten für die unmagnetischen Ausgangspartikel aus Beispiel 4 überein.

### Beispiel 10:

Auf die gleiche Weise wie in Beispiel 9 werden hier 5 ml magnetischen Kolloids auf Toluolbasis aus Beispiel 1, 45 ml Wasser und 0,16 g SDS werden in einem Ultraschallbad homogenisiert, so dass sich eine Öl-in-Wasser Emulsion mit einer Tropfengröße von 0,2 - 0,3 µm bildet. Diese Emulsion wird mit 20 ml einer wässrigen Suspension vermischt, die 5 g der aus Beispiel 9 resultierenden magnetischen PSt Partikel enthält. Nach einer Rührzeit von 10 h bei Raumtemperatur werden die gequollenen magnetischen PSt Partikel von der Emulsion durch Magnetische Sedimentation abgetrennt. Die gequollenen magnetischen PSt Partikel werden unter Rühren für 5 h bei Raumtemperatur in 50 ml Aceton eingebracht, wobei das Toluol von den gequollenen PSt Partikeln extrahiert wird. Anschließend werden die entstandenen, kompakten magnetischen PSt Partikel von dem Aceton durch Magnetische Sedimentation abgetrennt. Der resultierende Magnetitgehalt in den magnetischen PSt Partikeln wird durch diese zweite Behandlung von ursprünglich ca. 40 Gew.-% in Beispiel 9 auf ca. 50 Gew.-% gesteigert. Die mit Hilfe eines ESEM (Environmental Scanning Electron Microscope) bestimmten Werte für den mittleren Partikeldurchmesser und die Partikelgrößenverteilung stimmen nahezu mit den Werten für die unmagnetischen Ausgangspartikel aus Beispiel 4 überein.

### Beispiel 11:

Bei diesem Beispiel einer Umwandlung werden 10 ml magnetischen Kolloids auf Hexanbasis aus Beispiel 1, 90 ml Wasser und 0,32 g SDS in einem Ultraschallbad homogenisiert, so dass sich eine Öl-in-Wasser Emulsion mit einer Tropfengröße von 0,2 - 0,3 µm bildet. Diese Emulsion wird mit 20 ml einer wässrigen Suspension vermischt, die 5 g PVAc Partikel aus Beispiel 5 enthält. Nach einer Rührzeit von 5 h bei 45°C werden 100 ml Aceton direkt zu dieser Mischung gegeben und das Rühren wird für weitere 5 h bei 45°C fortgesetzt. Hierdurch wird das Hexan von den gequollenen PVAc Partikeln extrahiert. Anschließend werden die entstandenen, kompakten magnetischen PVAc Partikel von dem Aceton durch magnetische Sedimentation abgetrennt. Der resultierende Magnetitgehalt in den magnetischen PVAc Partikeln beträgt ca. 28 Gew.-%. Die mit Hilfe eines ESEM (Environmental Scanning Electron Microscope) bestimmten Werte für den mittleren Partikeldurchmesser und die Partikelgrößenverteilung stimmen nahezu mit den Werten für die unmagnetischen Ausgangspartikel aus Beispiel 5 überein.

## Patentansprüche

1. Verfahren zur Herstellung magnetischer Polymerpartikel, umfassend folgenden Verfahrensschritte:
a) Bereitstellung eines hydrophoben Pulvers, bestehend aus einem Kunststoffpolymer oder einem Kunststoffcopolymer,
b) Bereitstellung einer kolloidalen Dispersion von fein verteilten magnetischen Materialien in einem hydrophoben unpolaren organischen Lösungsmittel,
c) Vermischen des hydrophoben Pulvers mit der kolloidalen Dispersion und dem hydrophoben organischen Lösungsmittel zu einer Mischung, wobei es zu einer Quellung des hydrophoben Pulvers kommt, sowie
d) Entfernen des unpolaren organischen Lösungsmittels aus der Mischung, wobei sich ein Anteil an magnetischen Materialien im hydrophoben Pulver zwischen 0,1 und 75 Gew.-% einstellt.

2. Verfahren nach Anspruch 1, umfassend weitere Verfahrensschritte, welche mindestens einer Wiederholung der Verfahrensschrittfolge c) und d) entsprechen.

3. Verfahren nach Anspruch 1 oder 2, wobei das Kunststoffpolymer ein hydrophobes Vinylmonomer ist.

4. Verfahren nach Anspruch 1 oder 2, wobei das Kunststoffcopolymer aus 50-100 Gew.-% eines hydrophoben Vinylmonomers, 0-50 Gew.-% eines hydrophilen Vinylmonomers und 0-10 Gew.-% eines vernetzbaren Vinylmonomers besteht.

5. Verfahren nach einen der Ansprüche 3 oder 4, wobei das hydrophobe Vinylmonomer ein Styrol, eines seiner Derivate, Alkylmethacrylate oder Vinylester ist.

6. Verfahren nach einen der Ansprüche 4 oder 5, wobei das hydrophilen Vinylmonomeren ein um Amino, Carboxyl oder Hydroxyl substituiertes acrylisches Monomer und das vernetzbare Vinylmonomer ein Divinylbenzol, seine Derivate, konjungierte Diene oder Polyolmethacrylate ist.

7. Verfahren nach einem der vorangegangenen Ansprüche, wobei das hydrophobe Pulver eine poly- oder monodisperse Partikelgrößenverteilung besitzt, wobei die Größe der Polymerpartikel zwischen 50 Nanometer und 500 Mikrometer liegt.

8. Verfahren nach einem der vorangegangenen Ansprüche, wobei die feinverteilten magnetischen Materialien Eisen, Kobalt, Nickel oder deren Legierungen mit anderen Metallen oder ein Metalloxid wie Magnetit, γ-Hämatit oder Chromdioxid sind und eine Partikelgröße zwischen 3 und 200 nm aufweisen.

9. Verfahren nach einem der vorangegangenen Ansprüche, wobei die feinverteilten magnetischen Materialien mit einer hydrophoben, oberflächenaktiven Substanz beschichtet sind.

10. Verfahren nach einem der vorangegangenen Ansprüche, wobei der Anteil der feinverteilten magnetischen Materialien in der kolloidalen Dispersion zwischen 0,2 bis 50 Gew.-% liegt.

11. Verfahren nach einem der vorangegangenen Ansprüche, wobei das unpolare organische Lösungsmittel aus aromatischen Verbindungen, chlorierten aromatischen Verbindungen, aliphatischen und zyklischen Kohlenwasserstoffen, chlorierten aliphatischen Verbindungen, Dialkylethern, Alkoholen oder Estern besteht.

12. Verfahren nach einem der vorangegangenen Ansprüche, wobei das Entfernen des organischen Lösungsmittels aus der Mischung mit einem Trocknungsprozess erfolgt.

13. Verfahren nach einem der vorangegangenen Ansprüche, wobei das Entfernen des unpolaren organischen Lösungsmittels aus der Mischung durch Waschen des hydrophoben Pulvers mit einem polaren organischen Lösungsmittel, welches keine Quellung des hydrophoben Pulvers verursacht und sich mit dem unpolaren organischen Lösungsmittel mischt, erfolgt.

14. Verfahren nach Anspruch 13, wobei das polare organische Lösungsmittel ein Alkohol, Keton oder Äther ist.

## Claims

1. Method of producing magnetic polymer particles, said method including the following methods steps:
a) preparing a hydrophobic powder, comprising a plastics material polymer or a plastics material copolymer,
b) preparing a colloidal dispersion of finely distributed magnetic materials in a hydrophobic non-polar organic solvent,
c) mixing the hydrophobic powder with the colloidal dispersion and the hydrophobic organic solvent to form a mixture, leading to a swelling of the hydrophobic powder, and
d) removing the non-polar organic solvent from the mixture, a proportion of magnetic materials in the hydrophobic powder being set between 0.1 and 75 % by wt.

2. Method according to claim 1, including additional method steps, which correspond at least to a repetition of method step sequence c) and d).

3. Method according to claim 1 or 2, wherein the plastics material polymer is a hydrophobic vinyl monomer.

4. Method according to claim 1 or 2, wherein the plastics material copolymer comprises 50 - 100 % by wt. of a hydrophobic vinyl monomer, 0 - 50 % by wt. of a hydrophilic vinyl monomer and 0 - 10 % by wt. of a cross-linkable vinyl monomer.

5. Method according to one of claims 3 or 4, wherein the hydrophobic vinyl monomer is a styrene, one of its derivatives, alkyl methacrylates or vinyl esters.

6. Method according to one of claims 4 or 5, wherein the hydrophilic vinyl monomer is an amino-, carboxyl- or hydroxyl-substituted acrylic monomer, and the cross-linkable vinyl monomer is a divinyl benzene, its derivatives, conjugated dienes or polymethacrylates.

7. Method according to one of the preceding claims, wherein the hydrophobic powder has a poly- or monodisperse particle size distribution, the size of the polymer particles lying between 15 nanometres and 500 micrometres.

8. Method according to one of the preceding claims, wherein the finely distributed magnetic materials are iron, cobalt, nickel or alloys thereof with other metals, or a metal oxide such as magnetite, γ-hematite or chromium dioxide, and have a particle size between 3 and 200 nm.

9. Method according to one of the preceding claims, wherein the finely distributed magnetic materials are coated with a hydrophobic surface-active substance.

10. Method according to one of the preceding claims, wherein the proportion of finely distributed magnetic materials in the colloidal dispersion lies between 0.2 and 50 % by wt..

11. Method according to one of the preceding claims, wherein the non-polar organic solvent comprises aromatic compounds, chlorinated aromatic compounds, aliphatic and cyclic hydrocarbons, chlorinated aliphatic compounds, dialkyl ethers, alcohols or esters.

12. Method according to one of the preceding claims, wherein the removal of the organic solvent from the mixture is effected with a drying process.

13. Method according to one of the preceding claims, wherein the removal of the non-polar organic solvent from the mixture is effected by washing the hydrophobic powder with a polar organic solvent, which causes no swelling of the hydrophobic powder and mixes with the non-polar organic solvent.

14. Method according to claim 13, wherein the polar organic solvent is an alcohol, ketone or ether.

## Revendications

1. Procédé de fabrication de particules polymères magnétiques, comprenant les étapes suivantes :
a) préparation d'une poudre hydrophobe, constituée d'un polymère synthétique ou d'un copolymère synthétique,
b) préparation d'une dispersion colloïdale de matières magnétiques finement dispersées dans un solvant organique apolaire hydrophobe,
c) mélange de la poudre hydrophobe à la dispersion colloïdale et au solvant organique hydrophobe pour obtenir un mélange, au cours duquel la poudre hydrophobe gonfle, ainsi que
d) élimination du solvant organique apolaire du mélange, une fraction de matières magnétiques entre 0,1 et 75 % en poids apparaissant dans la poudre hydrophobe.

2. Procédé selon la revendication 1,
comprenant d'autres étapes qui correspondent au moins à une répétition de la suite d'étapes c) et d).

3. Procédé selon la revendication 1 ou 2,
dans lequel le polymère synthétique est un monomère de vinyle hydrophobe.

4. Procédé selon la revendication 1 ou 2,
dans lequel le copolymère synthétique est constitué de 50 à 100 % en poids d'un monomère de vinyle hydrophobe, de 0 à 50 % en poids d'un monomère de vinyle hydrophile et de 0 à 10 % en poids d'un monomère de vinyle réticulable.

5. Procédé selon l'une quelconque des revendication 3 ou 4,
dans lequel le monomère de vinyle hydrophobe est un styrène, l'un de ses dérivés, des méthacrylates d'alkyle ou des esters vinyliques.

6. Procédé selon l'une quelconque des revendications 4 ou 5,
dans lequel le monomère de vinyle hydrophile est un monomère acrylique substitué par un groupe amino, carboxyle ou hydroxyle et le monomère de vinyle réticulable est un divinylbenzène, ses dérivés, des diènes conjugués ou des méthacrylates de polyol.

7. Procédé selon l'une quelconque des revendications précédentes,
dans lequel la poudre hydrophobe présente une répartition polydispersée ou monodispersée des tailles de particule, la taille des particules polymères étant comprise entre 50 nanomètres et 500 microns.

8. Procédé selon l'une quelconque des revendications précédentes,
dans lequel les matières magnétiques finement dispersées sont du fer, du cobalt, du nickel ou leurs alliages avec d'autres métaux ou un oxyde métallique comme la magnétite, la γ-hématite ou le dioxyde de chrome et présentent des particules mesurant entre 3 et 200 nm.

9. Procédé selon l'une quelconque des revendications précédentes,
dans lequel les matières magnétiques finement dispersées sont recouvertes d'une substance tensioactive hydrophobe.

10. Procédé selon l'une quelconque des revendications précédentes,
dans lequel la fraction de matières magnétiques finement dispersées dans la dispersion colloïdale est comprise entre 0,2 et 50 % en poids.

11. Procédé selon l'une quelconque des revendications précédentes,
dans lequel le solvant organique apolaire est constitué de composés aromatiques, de composés aromatiques chlorés, d'hydrocarbures aliphatiques et cycliques, de composés aliphatiques chlorés, d'éthers dialkyliques, d'alcools ou d'esters.

12. Procédé selon l'une quelconque des revendications précédentes,
selon lequel le solvant organique est éliminé du mélange par séchage.

13. Procédé selon l'une quelconque des revendications précédentes,
selon lequel le solvant organique apolaire est éliminé du mélange par lavage de la poudre hydrophobe avec un solvant organique polaire qui ne provoque pas le gonflement de la poudre hydrophobe et se mélange au solvant organique apolaire.

14. Procédé selon la revendication 13,
dans lequel le solvant organique polaire est un alcool, une cétone ou un éther.
